# EUROPÄISCHE PATENTANMELDUNG

(11) **EP 4 846 835 A1**
(43) Veröffentlichungstag der Anmeldung: **02.12.2026**
(21) Anmeldenummer: 26166771.1
(22) Anmeldetag: 23.03.2026
(51) Int. Cl.: A01D 43/08

(54) **BAUGRUPPE FÜR EIN MAISGEBISS EINES FELDHÄCKSLERS UND MAISGEBISS**

(30) Priorität: 27.05.2025 DE 102025120806
(71) Anmelder: CLAAS Saulgau GmbH, 88340 Bad Saulgau (DE)
(72) Erfinder: Hafen, Felix, 88682 Salem (DE); Fischer, Josef, 88400 Biberach (DE); Butscher, Martin, 88273 Blitzenreute (DE)
(74) Vertreter: CLAAS Gruppe

(57) **Zusammenfassung**

Baugruppe (20) für ein Maisgebiss eines Feldhäckslers, mit Einspeisetrommeln (21, 22), die eingerichtet sind, Erntegut vom Maisgebiss in Richtung auf Einzugswalzen des Feldhäckslers zu fördern, mit Abstreifern (23), die eingerichtet sind, das Erntegut von den Einspeisetrommeln (21, 22) abzustreifen, wobei die mit einer jeweiligen Einspeisetrommel (21, 22) zusammenwirkenden Abstreifer (23) an einem jeweiligen Abstreifkasten (24, 25) montiert sind, wobei die Einspeisetrommeln (21, 22) und die Abstreifkästen (24, 25) auf einem gemeinsamen, selbsttragenden Bodenelement (28) montiert sind, über welches die Baugruppe (20) als Modul an einem Rahmen (100) des Maisgebisses montierbar ist.

## Beschreibung

Die Erfindung betrifft eine Baugruppe für ein Maisgebiss eines Feldhäckslers. Des Weiteren betrifft die Erfindung ein Maisgebiss eines Feldhäckslers.

DE 10 2015 109 604 A1 offenbart ein Maisgebiss eines Feldhäckslers mit mehreren Mäh- und Fördereinrichtungen, die dem Abtrennen von zu erntendem Erntegut und dem Transportieren des abgetrennten Ernteguts dienen. In einem mittleren Bereich des Maisgebisses sind hinter mittleren Mäh- und Fördereinrichtungen weitere Fördereinrichtungen angeordnet, die sogenannte Einspeisetrommeln ausbilden. Die Einspeisetrommeln sind eingerichtet, das Erntegut vom Maisgebiss in Richtung auf Einzugswalzen des Feldhäckslers zu fördern. Über Abstreifer kann von den als Einspeisetrommeln ausgebildeten Fördereinrichtungen Erntegut abgestreift werden.

DE 10 2013 215 799 A1 offenbart eine weiteres Maisgebiss eines Feldhäckslers mit Einspeisetrommeln und mit den Einspeisetrommeln zusammenwirkenden Abstreifern. Die Abstreifer sind dabei an Abstreifkästen montiert.

Bislang sind die Einspeisetrommeln sowie die Abstreifkästen eines Maisgebisses eines Feldhäckslers an einem Rahmen des Maisgebisses jeweils einzeln bzw. individuell montiert. Infolge von Toleranzen sowie Elastizitäten des Rahmens kann sich im Betrieb die Ausrichtung der Einspeisetrommeln und Abstreifkästen zueinander ungewollt ändern, wodurch dann während des Betriebs funktionsrelevante Maße im mittleren Einspeisebereich des Maisgebisses ungewollt verlorengehen. Hierdurch wird die Funktion des Maisgebisses beeinträchtigt.

Es besteht Bedarf daran, den Einspeisebereich eines Maisgebisses so zu gestalten, dass funktionsrelevante Maße des Einspeisebereichs im Betrieb des Maisgebisses aufrechterhalten werden können. Aufgabe der hier vorliegenden Erfindung ist es, eine entsprechende Baugruppe für ein Maisgebiss eines Feldhäckslers und ein Maisgebiss eines Feldhäckslers mit einer solchen Baugruppe bereitzustellen.

Diese Aufgabe wird durch eine Baugruppe nach Anspruch 1 und durch ein Maisgebiss nach Anspruch 10 gelöst.

Erfindungsgemäß sind die Einspeisetrommeln und die Abstreifkästen auf einem gemeinsamen, selbsttragenden Bodenelement montiert, über welches die Baugruppe als Modul an einem Rahmen des Maisgebisses montierbar ist.

Erfindungsgemäß sind die Einspeisetrommeln und die Abstreifkästen auf dem gemeinsamen, selbsttragenden Bodenelement montiert, sodass das selbsttragende Bodenelement, die Einspeisetrommeln und die Abstreifkästen eine Baugruppe ausbilden, die als Modul an dem Rahmen des Maisgebisses montierbar ist. Die für die im mittleren Einspeisebereich des Maisgebisses funktionsrelevanten Maße relevanten Baugruppen des Maisgebisses sind demnach zu einem Modul zusammengefasst, welches als Modul montiert und dann als montiertes Modul am Rahmen des Maisgebisses montiert werden kann. Elastizitäten des Rahmens des Maisgebisses sowie Toleranzen des Rahmens des Maisgebisses haben demnach keinen Einfluss auf die funktionsrelevanten Maße im Einspeisebereich des Maisgebisses. Toleranzketten werden minimiert, funktionsrelevante Maße können auch im Betrieb aufrechterhalten werden. Ferner vereinfacht sich die Montage des Maisgebisses. Ebenso können Kosten- und Gewichtsvorteile für ein Maisgebiss bereitgestellt werden.

Vorzugsweise ist das selbsttragende Bodenelement von einem Getriebegehäuse eines Getriebes gebildet, über welches die Einspeisetrommeln antreibbar sind. Dies ist zur Einhaltung der funktionsrelevanten Maße im Einspeisebereich des Maisgebisses besonders bevorzugt. Über das Getriebegehäuse, welches das selbsttragende Bodenelement der Baugruppe bzw. des Moduls bereitstellt, kann die Baugruppe bzw. das Modul besonders vorteilhaft versteift werden. Ferner kann der benötigte Bauraum minimiert werden.

Vorzugsweise ist das selbsttragende Bodenelement als wannenartiges Tiefziehteil mit einer Vertiefung zur Aufnahme von Stirnrädern des Getriebes ausgebildet. Das selbsttragende Bodenelement dient dann nicht nur der Versteifung der Baugruppe bzw. des Moduls, sondern auch der Aufnahme von Stirnrädern des Getriebes, wodurch Bauraumvorteile und Gewichtsvorteile realisiert werden können.

Vorzugsweise verläuft an einer dem Feldhäcksler zugewandten Seite der Baugruppe zwischen den Abstreifkästen eine hintere Querstrebe, die insbesondere an oberen Abschnitten der Abstreifkästen angreift. Dies dient der weiteren Versteifung der erfindungsgemäßen Baugruppe bzw. des Moduls, um im Betrieb die funktionsrelevanten Maße aufrechtzuerhalten.

Vorzugsweise verläuft an einer vom Feldhäcksler abgewandten Seite der Baugruppe zwischen den Einspeisetrommeln eine vordere Querstrebe, die insbesondere an Pfosten angreift, die ihrerseits an dem Bodenelement angreifen. Auch dies dient der weiteren Versteifung der erfindungsgemäßen Baugruppe bzw. des Moduls zur Aufrechterhaltung der funktionsrelevanten Maße im Einspeisebereich des Maisgebisses während des Betriebs desselben.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der schematischen Zeichnung näher erläutert. Dabei zeigt:
- Fig. 1: eine perspektivische Vorderansicht eines Teils eines Rahmens eines Maisgebisses eines Feldhäckslers zusammen mit einer erfindungsgemäßen Baugruppe für das Maisgebiss des Feldhäckslers,
- Fig. 2: eine perspektivische Vorderansicht der erfindungsgemäßen Baugruppe für ein Maisgebiss eines Feldhäckslers,
- Fig. 3: eine perspektivische Rückansicht einer erfindungsgemäßen Baugruppe für ein Maisgebiss eines Feldhäckslers,
- Fig. 4: eine teilweise Explosionsdarstellung der Fig. 2,
- Fig. 5: ein Detail der Baugruppe der Fig. 2 bis Fig. 4,
- Fig. 6: ein Detail der der Fig. 7,
- Fig. 7: ein weiteres Detail der Baugruppe der Fig. 1 bis Fig. 4,
- Fig. 8: das Detail der Fig. 7 in einem zweiten Zustand,
- Fig. 9: ein weiteres Detail der Baugruppe der Fig. 1 bis Fig. 4,
- Fig. 10: ein weiteres Detail der Baugruppe der Fig. 1 bis Fig. 4,
- Fig. 11: ein weiteres Detail der Baugruppe der Fig. 1 bis Fig. 4,
- Fig. 12: eine schematisierte Darstellung des Details der Fig. 11,
- Fig. 13: eine Alternative zum Detail der Fig. 11.

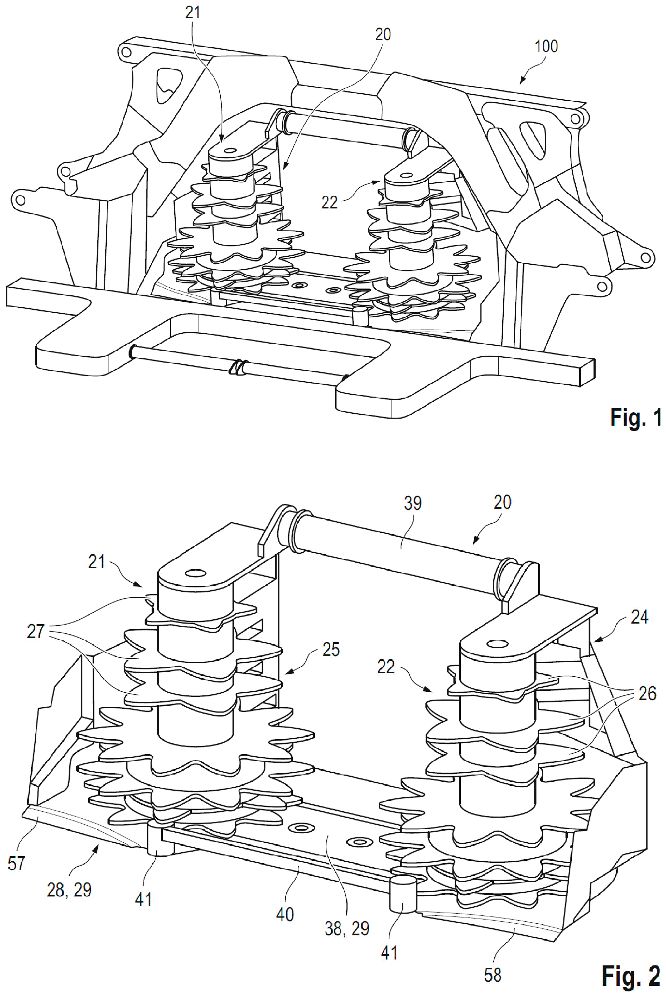

Fig. 1 bis 4 zeigen jeweils perspektivische Ansichten einer Baugruppe 20 für ein Maisgebiss eines Feldhäckslers, wobei diese Baugruppe 20 Einspeisetrommeln 21, 22 aufweist, die eingerichtet sind, vom Maisgebiss abgetrenntes Erntegut in Richtung auf nicht gezeigte Einzugswalzen des Feldhäckslers zu fördern. Mit den Einspeisetrommeln 21, 22 der Baugruppe 20 wirken Abstreifer 23 zusammen, die an Abstreifkästen 24, 25 der Baugruppe 20 montiert sind. So wirkt mit jeder der beiden Einspeisetrommeln 21, 22 jeweils ein Abstreifkasten 24, 25 zusammen, der mehrere Abstreifer 23 aufweist, wobei ein jeweiliger Abstreifer 23 zwischen übereinander positionierte Einspeisescheiben 26, 27 der jeweiligen Einspeisetrommel 21, 22 eingreift, um im Betrieb Erntegut von den Einspeisetrommeln 21, 22 abzustreifen. Die Einspeisetrommel 21, 22 sowie die Abstreifkästen 24, 25 bilden einen sogenannten Einspeisebereich der Baugruppe 20 und damit eines die Baugruppe 20 aufweisenden Maisgebisses aus.

Die Einspeisetrommeln 21, 22 der Baugruppe 20 sowie die Abstreifkästen 24, 25 der Baugruppe 20 sind an einem gemeinsamen, selbsttragenden Bodenelement 28 der Baugruppe 20 montiert, über welches die Baugruppe 20, welche die Einspeisetrommeln 21, 22, die Abstreifkästen 24, 25 sowie das selbsttragende Bodenelement 28 umfasst, als eigenständiges Modul an einem Rahmen 100 des Maisgebisses montierbar ist.

Die Baugruppe 20 kann demnach als Modul unabhängig von anderen Baugruppen des Maisgebisses montiert und dann als vormontiertes Modul am Rahmen 100 des Maisgebisses montiert werden. Toleranzen und Elastizitäten des Rahmens 100 des Maisgebisses beeinträchtigen nicht die Relativposition zwischen den Einspeisetrommeln 21, 22 sowie den Abstreifkästen 23, 24, sodass trotz möglicher Toleranzen und Elastizitäten des Rahmens 100 des Maisgebisses im Betrieb funktionsrelevante Maße im Einspeisebereich des Maisgebisses aufrechterhalten werden können. Sämtliche Elemente der Baugruppe 20 sind bei der Montage desselben gut zugänglich.

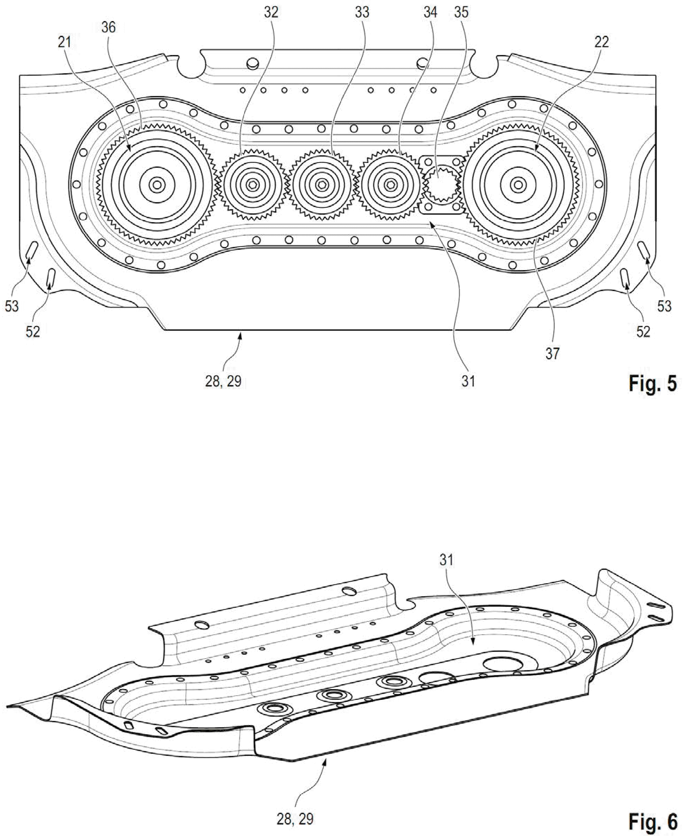

Das selbsttragende Bodenelement 28 der Baugruppe 20 ist vorzugsweise von einem Getriebegehäuse 29 eines Getriebes 30 gebildet, über welches die Einspeisetrommeln 21, 22 antreibbar sind. Fig. 5 und 6 zeigen das vom Getriebegehäuse 29 bereitgestellte, selbsttragende Bodenelement 28 in unterschiedlichen Ansichten, wobei es sich bei dem selbsttragenden Bodenelement 28 um ein wannenartiges Tiefziehteil mit einer Vertiefung 31 handelt, die zur Aufnahme von ineinander kämmenden Stirnrädern 32, 33, 34, 35, 36, 37 des Getriebes 30 ausgebildet ist.

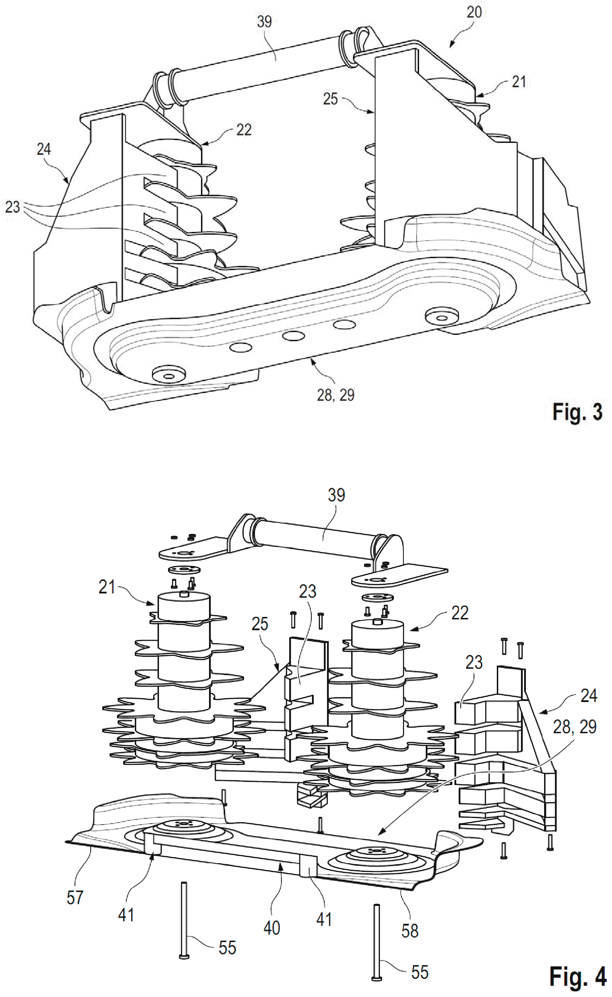

So zeigt Fig. 5 ein als Antriebszahnrad dienendes Stirnrad 35, von welchem aus beide Einspeisetrommeln 21, 22 antreibbar sind, wobei das Antriebszahnrad 35 unmittelbar in das der Einspeisetrommel 22 zugeordnete Stirnrad 37 und über die Stirnräder 32, 33 und 34 mittelbar in das der Einspeisetrommel 21 zugeordnete Stirnrad 36 kämmt, um beide Einspeisetrommeln 21, 22 ausgehend vom Antriebszahnrad 35 anzutreiben. Die in Fig. 3 gezeigten Stirnrädern 32, 33, 34, 35, 36 und 37 finden allesamt in der Vertiefung 31 des selbsttragenden Bodenelements 28, welches vom Getriebegehäuse 29 bereitgestellt wird, platzsparend Aufnahme.

Wie Fig. 1, 2 zeigen, ist das vom Getriebegehäuse 29 bereitgestellte selbsttragende Bodenelement 28 an einer Oberseite von einem Deckelelement 38 des Getriebegehäuses 29 verschlossen, um insbesondere die Vertiefung 31, in welcher die Stirnräder 32 bis 37 aufgenommen sind, zu verschließen und so ein Eindringen von Erntegut in den Bereich der Stirnräder 32 bis 37 zu verhindern.

Zur weiteren Versteifung der Baugruppe 20, die als vormontiertes Modul am Rahmen 100 des Maisgebisses montierbar ist und den Einspeisebereich eines Maisgebisses des Feldhäckslers definiert, verläuft an einer dem Feldhäcksler zugewandten Seite der Baugruppe 20 zwischen den Abstreifkästen 24, 25 eine hintere Querstrebe 39, wobei die hintere Querstrebe 39 an oberen Abschnitten der Abstreifkästen 24, 25 angreift. Eine weitere Versteifung der Baugruppe 20 erfolgt über eine an der vom Feldhäcksler abgewandten Seite der Baugruppe 20 in einem Bereich zwischen den Einspeisetrommeln 21, 22 verlaufende vordere Querstrebe 40, die an Pfosten 41 angreift. Die Pfosten 41 greifen ihrerseits an dem Bodenelement 28 an und dienen auch der Montage des Moduls bzw. der Baugruppe 20 am Rahmen 100 des Maisgebisses.

Die vordere Querstrebe 40 erstreckt sich in einem unteren, vorderen Bereich der Baugruppe 20 zwischen den Einspeisetrommeln 21, 22.

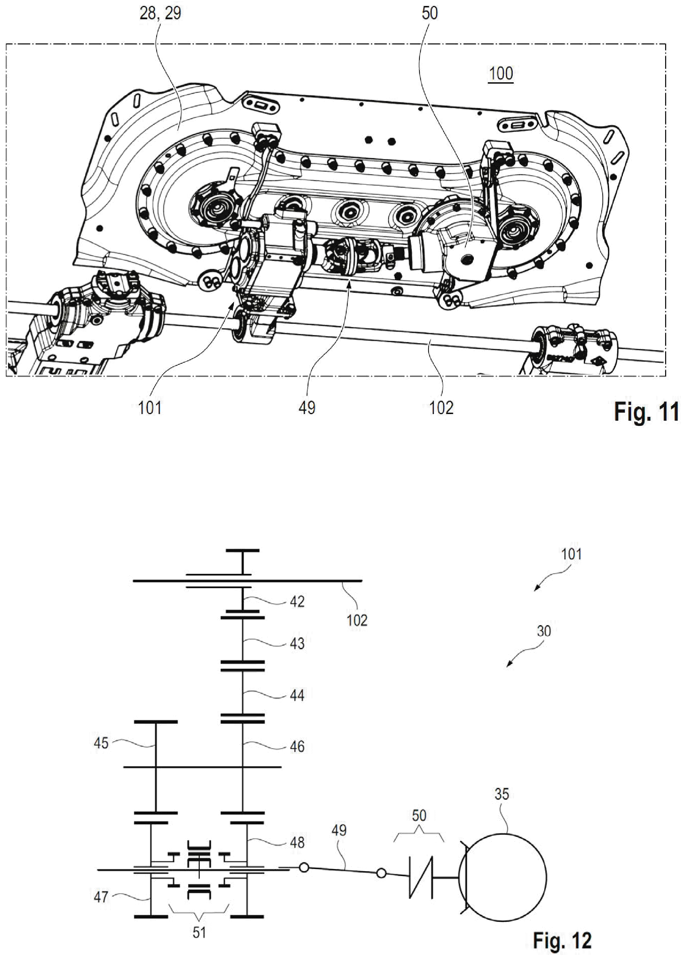

Dann, wenn wie in Fig. 11 und 12 gezeigt, die Einspeisetrommeln 21, 22 über einen mechanischen Antrieb 101 antreibbar sind, sind zusätzlich zu den in Fig. 5 gezeigten Stirnrädern 32, 33, 34, 35, 36, 37 weitere Zahnräder vorhanden. So ist in diesem Fall das Getriebe 30 eingerichtet, von einer Hauptwelle 102 des Maisgebisses Antriebsleistung abzugreifen und über das für beide Einspeisetrommeln 21, 22 gemeinsame Antriebszahnrad 35 der ineinander kämmenden Stirnräder 32 bis 37 einzuleiten.

Zusätzlich zu diesen ineinander kämmenden Stirnrädern 32 bis 37, die das für beide Einspeisetrommeln 21, 22 gemeinsame Antriebszahnrad 35 aufweisen, weist dann das Getriebe 30 weitere Zahnräder 42, 43, 44, 45, 46, 47, 48 auf, die dazu dienen, die Antriebsleistung von der Hauptwelle 102 abzugreifen und dann die abgegriffene Antriebsleistung in Richtung auf eine Gelenkwelle 49 zu übertragen, um die Antriebsleistung über die Gelenkwelle 49 und ein Winkelgetriebe 50 in das Antriebszahnrad 35 und über die weiteren Stirnräder 32, 33, 34, 36, 37 in die Einspeisetrommeln 21, 22 einzuleiten. Die Zahnräder 42 bis 48 können auch als erste Zahnräder und die Stirnräder 33 bis 37 als zweite Zahnräder bezeichnet werden.

Die Zahnräder 45 und 46 sowie die Zahnräder 47 und 48 der ersten Zahnräder sind jeweils auf einer gemeinsamen Welle angeordnet, wobei die Zahnräder 45 und 47 sowie die Zahnräder 46 und 48 ineinander kämmen. Mit den Zahnrädern 47, 48 wirkt eine schaltbare Kupplung 51 zusammen, um die Übersetzung des Getriebes 30 anzupassen. Abhängig von der Stellung der schaltbaren Kupplung 51 wird entweder die Antriebsleistung über die Zahnräder 42, 43, 44, 46, 48 oder über die Zahnräder 42, 43, 44, 46, 45, 47 in die Gelenkwelle 49 und über die Gelenkwelle 49 und das Winkelgetriebe 50 in das Antriebszahnrad 35 eingespeist.

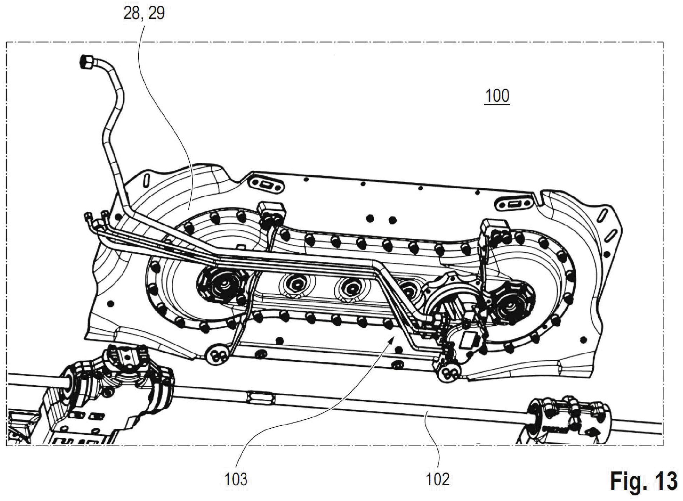

Dann, wenn wie in Fig. 13 gezeigt, die Einspeisetrommeln 21, 22, ausgehend von einem hydraulischen Antrieb 103 angetrieben werden, umfasst das Getriebe 30 ausschließlich die in Fig. 3 gezeigten Stirnräder 32 bis 37. Der hydraulische Antrieb 103 treibt dann direkt das Antriebszahnrad 35 der Stirnräder 32 bis 37 an.

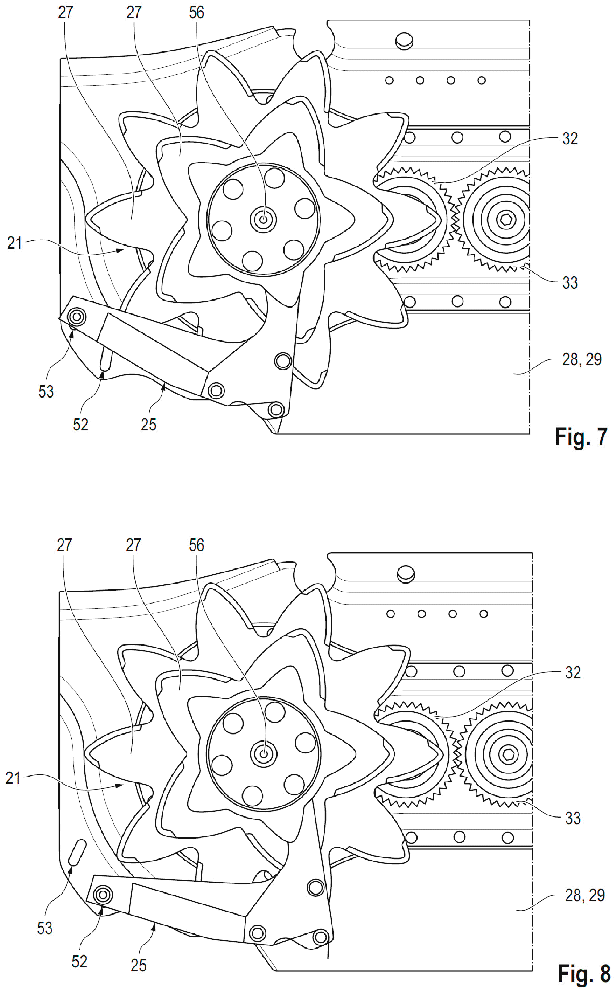

Wie oben ausgeführt, verfügt die Baugruppe 20 über die Einspeisetrommeln 21, 22 sowie die mit den Einspeisetrommeln 21, 22 zusammenwirkenden Abstreifkästen 24, 25. Wie einem Vergleich der Fig. 7 und 8 entnommen werden kann, die einen Ausschnitt aus der Baugruppe 20 im Bereich der Einspeisetrommel 21 sowie des Abstreifkastens 25 zeigen, kann der Abstand zwischen den Abstreifkästen 24, 25 in Querrichtung des Maisgebisses bzw. in Querrichtung des das Maisgebiss aufweisenden Feldhäckslers sowie eine Winkelstellung zwischen dem jeweiligen Abstreifkasten 24, 25 und der jeweiligen Einspeisetrommel 21, 22 angepasst werden. So kann die Einspeisebreite der Baugruppe 20 und damit eines die Baugruppe 20 aufweisenden Maisgebisses einfach an die Einzugsbreite des Feldhäckslers angepasst werden. Zur Anpassung der Winkelstellung zwischen dem jeweiligen Abstreifkasten 24, 25 und der jeweiligen Einspeisetrommel 21, 22 und des Abstands zwischen den Abstreifkasten 24, 25 ist der jeweilige Abstreifkasten 24, 25 um einen Mittelpunkt oder eine Drehachse 56 der jeweiligen Einspeisetrommel 21, 22 schwenkbar. Wie am besten Fig. 5 entnommen werden kann, weist das Bodenelement 28 für jeden Abstreifkasten 24, 25 mindestens zwei Montageschnittstellen 52, 53 auf, die als Langlöcher ausgebildet sind. An diesen Montageschnittstellen 52, 53 ist ein jeweiliger Abstreifkasten 24, 25 montierbar. Über die Wahl einer jeweiligen Montageschnittstelle 52, 53 für die Montage des jeweiligen Abstreifkastens 24, 25 kann sowohl der Abstand zwischen den Abstreifkästen 24, 25 als auch die Winkelstellung zwischen dem jeweiligen Abstreifkasten 24, 25 und der jeweiligen Einspeisetrommel 21, 22 eingestellt werden. So wird in Fig. 7 die äußere Montageschnittstelle 53 und in Fig. 8 die innere Montageschnittstelle 52 zur Montage des dort gezeigten Abstreifkastens 25 am Bodenelement 28 genutzt, wobei die Montageschnittstellen 52, 53 nicht nur in Querrichtung, sondern auch in Längsrichtung der Bodenplatte 28 zueinander versetzt sind und schräg zueinander verlaufen. Dadurch verändert sich beim Wechsel der jeweiligen Montageschnittstelle 52, 53 nicht nur der Abstand zwischen den Abstreifkästen 24, 25, sondern auch die Winkelstellung zwischen dem jeweiligen Abstreifkasten 24, 25 und der jeweiligen Einspeisetrommel 21, 22. Hiermit ist es möglich, für die Baugruppe 20 die Einspeisebreite anzupassen und so die Baugruppe 20 im Bereich unterschiedlicher Maisgebisse und unterschiedlicher Feldhäcksler mit unterschiedlichen Einzugsbreiten zu nutzen.

Die Montageschnittstellen 52, 53 sind vorzugsweise jeweils an, insbesondere schalenförmigen, Rückwänden des Bodenelements 28 angeordnet, die von der Unterseite nach oben verlaufen und an der Oberseite jeweils ein Plateau für die Montageschnittstellen 52, 53 bilden. Dadurch wird besonders vorteilhaft Bauraum gespart und ein sehr funktionssicherer Betrieb gewährleistet.

Wie oben bereits ausgeführt, sind die Einspeisetrommeln 21, 22 ausgehend vom für beide Einspeisetrommeln gemeinsamen Antriebszahnrad 35 antreibbar.

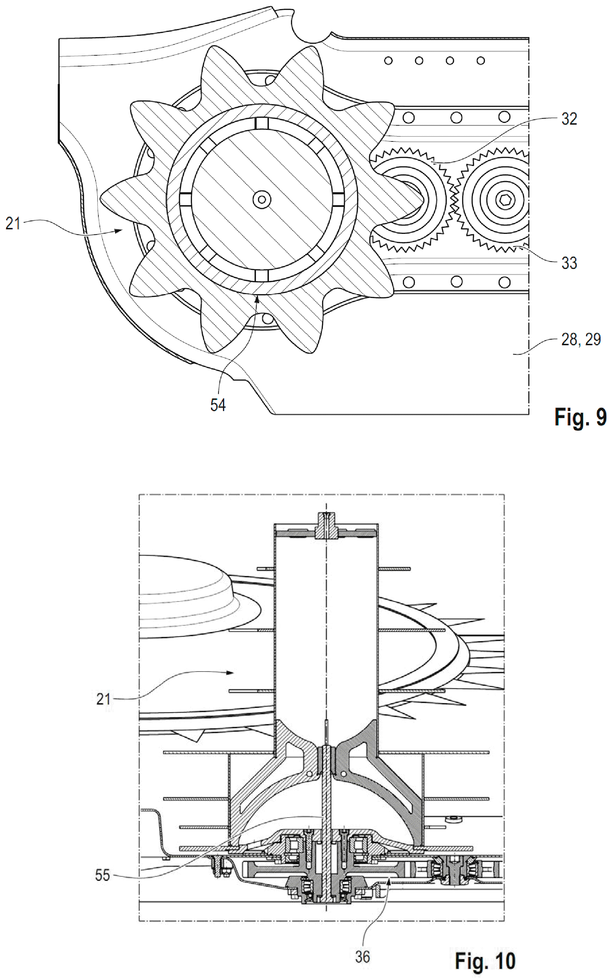

Fig. 9 zeigt für die Einspeisetrommel 21 einen Mitnehmernocken 54, um die Einspeisetrommel 21 radial über einen Formschluss an das Stirnrad 36 anzubinden und so die Anbindung der Einspeisetrommel 31 an das Stirnrad 36 radial zu sichern. Die axiale Sicherung der Einspeisetrommel 21 erfolgt über eine zentrale Schraube 55.

Das Getriebegehäuse 29 weist in Abschnitten 57, 58 seitlich neben den Einspeisetrommeln 21, 22 abgeschrägte Konturen auf, die den Erntegutfluss erleichtern. Die Abschnitte 57, 58 mit der den Erntegutfluss erleichternden Kontur sind seitlich neben den Pfosten 41 und seitlich neben der sich zwischen den Pfosten 41 ersteckenden vorderen Querstrebe 40 angeordnet. In den erntegutführenden Abschnitten, insbesondere in den Abschnitten 57, 58, kann das Getriebegehäuse 29 über eine Härtung und/oder Panzerung von Verschleiß geschützt sein.

### Bezugszeichenliste

- 20: Baugruppe
- 21: Einspeisetrommel
- 22: Einspeisetrommel
- 23: Abstreifer
- 24: Abstreifkasten
- 25: Abstreifkasten
- 26: Einspeisescheibe
- 27: Einspeisescheibe
- 28: Bodenelement
- 29: Getriebegehäuse
- 30: Getriebe
- 31: Vertiefung
- 32: Stirnrad
- 33: Stirnrad
- 34: Stirnrad
- 35: Stirnrad
- 36: Stirnrad
- 37: Stirnrad
- 38: Deckelelement
- 39: Querstrebe
- 40: Querstrebe
- 41: Pfosten
- 42: Zahnrad
- 43: Zahnrad
- 44: Zahnrad
- 45: Zahnrad
- 46: Zahnrad
- 47: Zahnrad
- 48: Zahnrad
- 49: Gelenkwelle
- 50: Winkelgetriebe
- 51: Kupplung
- 52: Montageschnittstelle
- 53: Montageschnittstelle
- 54: Mitnehmernocken
- 55: Schraube
- 56: Drehachse
- 57: Abschnitt
- 58: Abschnitt

- 100: Rahmen
- 101: mechanischer Antrieb
- 102: Hauptwelle
- 103: hydraulischer Antrieb

## Patentansprüche

1. Baugruppe (20) für ein Maisgebiss eines Feldhäckslers,
mit Einspeisetrommeln (21, 22), die eingerichtet sind, Erntegut vom Maisgebiss in Richtung auf Einzugswalzen des Feldhäckslers zu fördern,
mit Abstreifern (23), die eingerichtet sind, das Erntegut von den Einspeisetrommeln (21, 22) abzustreifen, wobei die mit einer jeweiligen Einspeisetrommel (21, 22) zusammenwirkenden Abstreifer (23) an einem jeweiligen Abstreifkasten (24, 25) montiert sind,
**dadurch gekennzeichnet, dass**
die Einspeisetrommeln (21, 22) und die Abstreifkästen (24, 25) auf einem gemeinsamen, selbsttragenden Bodenelement (28) montiert sind, über welches die Baugruppe (20) als Modul an einem Rahmen (100) des Maisgebisses montierbar ist.

2. Baugruppe (20) nach Anspruch 1, **dadurch gekennzeichnet, dass** das selbsttragende Bodenelement (28) von einem Getriebegehäuse (29) eines Getriebes (30) gebildet ist, über welches die Einspeisetrommeln (21, 22) antreibbar sind.

3. Baugruppe (20) nach Anspruch 2, **dadurch gekennzeichnet, dass** das selbsttragende Bodenelement (28) als wannenartiges Tiefziehteil mit einer Vertiefung (31) zur Aufnahme von Stirnrädern (32, 33, 34, 35, 36, 37) des Getriebes (30) ausgebildet ist.

4. Baugruppe (20) nach Anspruch 2 oder 3, **dadurch gekennzeichnet, dass** die Einspeisetrommeln (21, 22) ausgehend von einem mechanischen Antrieb (101) oder hydraulischen Antrieb (103) abtreibbar sind.

5. Baugruppe (20) nach einem der Ansprüche 1 bis 4, **dadurch gekennzeichnet, dass** an einer dem Feldhäcksler zugewandten Seite der Baugruppe (20) zwischen den Abstreifkästen (24, 25) eine hintere Querstrebe (39) verläuft.

6. Baugruppe (20) nach Anspruch 5, **dadurch gekennzeichnet, dass** die hintere Querstrebe (39) an oberen Abschnitten der Abstreifkästen (23, 24) angreift.

7. Baugruppe (20) nach einem der Ansprüche 1 bis 6, **dadurch gekennzeichnet, dass** an einer vom Feldhäcksler abgewandten Seite der Baugruppe (20) in einem Bereich zwischen den Einspeisetrommeln (21, 22) eine vordere Querstrebe (40) verläuft.

8. Baugruppe (20) nach Anspruch 7, **dadurch gekennzeichnet, dass** die vordere Querstrebe (40) an Pfosten (41) angreift, die ihrerseits an dem Bodenelement (28) angreifen.

9. Baugruppe (10) nach einem der Ansprüche 1 bis 8, **dadurch gekennzeichnet, dass** ein Abstand zwischen den Abstreifkästen (23, 24) zur Einstellung der Einspeisebreite der Baugruppe (20) anpassbar ist.

10. Baugruppe (10) nach einem der Ansprüche 1 bis 9, **dadurch gekennzeichnet, dass** am Bodenelement (28) Rückwände angeordnet sind, die von der Unterseite nach oben verlaufen und an der Oberseite jeweils ein Plateau für Montageschnittstellen (52, 53) bilden.

11. Maisgebiss eines Feldhäckslers mit einer Baugruppe (10) nach einem der Ansprüche 1 bis 10.
